# EUROPEAN PATENT APPLICATION

(11) **EP 4 507 390 A1**
(43) Date of publication of application: **12.02.2025**
(21) Application number: 22936131.6
(22) Date of filing: 07.04.2022
(51) Int. Cl.: H04W 52/02, H04W 56/00

(54) **METHOD AND APPARATUS FOR TRANSMITTING POWER INFORMATION OF SYNCHRONIZATION SIGNAL, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/085553
(87) International publication number: WO 2023/193185

(57) **Abstract**

Provided in the present disclosure are a method and apparatus for transmitting power information of a synchronization signal, and a readable storage medium, which are applied to the technical field of wireless communications. The method comprises: receiving power configuration information of a synchronization signal sent by a first network device, wherein the power configuration information is used for indicating power information of a synchronization signal corresponding to a set receiver of a user equipment, and the set receiver is used for receiving a lower-power wake-up signal (LPWUS). In the present disclosure, power configuration information of a synchronization signal corresponding to an LPWUS receiver is received for a user equipment, such that the user equipment learns of the power configuration condition of the synchronization signal corresponding to the LPWUS receiver, and thus the user equipment determines, according to the power configuration information and the known LPWUS reception sensitivity and when a main receiver is in an operating state, when to turn on the LPWUS receiver, such that the user equipment controls the turning-on and turning-off of the main receiver and the LPWUS receiver more accurately, thereby reducing the power consumption of the user equipment.

## Description

### TECHNICAL FIELD

The present disclosure relates to the field of wireless communication technologies and, in particular, to a method and an apparatus for transmitting power information of a synchronization signal, and a readable storage medium.

### BACKGROUND

In some wireless communication techniques, a low power (LP) wake up signal (WUS) may be applied. In applying the low power wake up signal (LPWUS), the LPWUS corresponds to a separate receiver which may be referred to as an LPWUS receiver. A user equipment (UE) uses a primary transceiver to process uplink data and downlink data, and uses the separate receiver to receive the LPWUS. For example, when the primary transceiver of the UE is in a dormant state, after the LPWUS is received through the separate receiver corresponding to the LPWUS, the primary transceiver will be turned on and made to be in an operation state. When the primary transceiver of the UE is in the dormant mode, if the separate receiver corresponding to the WUS does not receive the LPWUS, or if the LPWUS is received and indicates not to wake up, the dormant state of the primary transceiver will continue to be maintained.

The LPWUS receiver needs to receive a synchronization signal to maintain a local clock. Considering that a receiving sensitivity of the LPWUS receiver is lower than that of the primary receiver, e.g., the primary receiver has a receiving sensitivity of -110 dBm while the LPWUS receiver has a receiving sensitivity of -80 dBm, a coverage enhancement is required for the synchronization signal corresponding to the LPWUS receiver. Meanwhile, the LPWUS receiver in the related art usually cannot accurately be informed of the turn-on time, resulting in an increase in power consumption.

### SUMMARY

The present disclosure provides a method and an apparatus for transmitting power information of a synchronization signal, and a readable storage medium.

In a first aspect, there is provided a method for transmitting power information of a synchronization signal, performed by a UE, where the method includes receiving power configuration information of the synchronization signal sent by a first network device, where the power configuration information is used for indicating the power information of the synchronization signal corresponding to a set receiver of the UE, and the set receiver is configured to receive a low power wake up signal.

In some possible embodiments, the receiving the power configuration information sent by the first network device includes receiving a system message broadcast by the first network device, where the system message includes the power configuration information of the synchronization signal.

In some possible embodiments, the power information is a power offset of a power of the synchronization signal relative to a power of a synchronization signal block (SSB).

In some possible embodiments, the power information is a positive difference of a power of the synchronization signal over a power of an SSB.

In some possible embodiments, the method further includes receiving time-frequency configuration information of the synchronization signal sent by the first network device, where the time-frequency configuration information includes at least one of: a frequency-domain position, a time-domain period, and a time-domain position offset.

In some possible embodiments, the method further includes receiving a system message broadcast by the first network device, where the system message includes the time-frequency configuration information.

In a second aspect, there is provided a method for transmitting power information of a synchronization signal, performed by a first network device, where the method includes sending power configuration information of the synchronization signal to a UE, where the power configuration information is used for indicating the power information of the synchronization signal corresponding to a set receiver of the UE, and the set receiver is configured to receive a low power wake up signal.

In some possible embodiments, the sending the power configuration information to the UE includes broadcasting a system message, where the system message includes the power configuration information of the synchronization signal.

In some possible embodiments, the power information is a power offset of a power of the synchronization signal relative to a power of an SSB.

In some possible embodiments, the power information is a positive difference of a power of the synchronization signal over a power of an SSB.

In some possible embodiments, the method further includes sending time-frequency configuration information of the synchronization signal to the UE, where the time-frequency configuration information includes at least one of: a frequency-domain position, a time-domain period, and a time-domain position offset.

In some possible embodiments, the method further includes broadcasting a system message, where the system message includes the time-frequency configuration information.

In some possible embodiments, the method further includes sending the time-frequency configuration information to a second network device.

In a third aspect, there is provided a communication device. The communication device may be configured to perform steps executed by the UE in the first aspect or in any of the possible designs of the first aspect described above. The UE may implement the functions in the above methods by means of a hardware structure, a software module or a hardware structure plus a software module.

In implementing the communication device shown in the first aspect by means of the software module, the communication device may include a transceiver module.

The transceiver module is configured to receive power configuration information sent by a first network device, where the power configuration information is used for indicating the power information of the synchronization signal corresponding to a set receiver of the UE, and the set receiver is configured to receive a low power wake up signal.

In a fourth aspect, there is provided a communication device. The communication device may be configured to perform steps executed by the network device in the second aspect or in any of the possible designs of the second aspect described above. The network device may implement the functions in the above methods by means of a hardware structure, a software module or a hardware structure plus a software module.

In implementing the communication device shown in the second aspect by means of the software module, the communication device may include a transceiver module.

The transceiver module is configured to send power configuration information to a UE, where the power configuration information is used for indicating the power information of the synchronization signal corresponding to a set receiver of the UE, and the set receiver is configured to receive a low power wake up signal.

In a fifth aspect, there is provided a communication device that includes a processor and a memory. The memory is configured to store a computer program; and the processor is configured to execute the computer program, thereby implementing the first aspect or any one of the possible designs of the first aspect.

In a sixth aspect, there is provided a communication device that includes a processor and a memory. The memory is configured to store a computer program; and the processor is configured to execute the computer program, thereby implementing the second aspect or any one of the possible designs of the second aspect.

In a seventh aspect, there is provided a computer-readable storage medium. The computer-readable storage medium stores an instruction (or referred to as a computer program, or a program) that, when invoked and executed on a computer, causes the computer to perform the first aspect or any one of the possible designs of the first aspect.

In an eighth aspect, there is provided a computer-readable storage medium. The computer-readable storage medium stores an instruction (or referred to as a computer program, or a program) that, when invoked and executed on a computer, causes the computer to perform the second aspect or any one of the possible designs of the second aspect.

In the present disclosure, the first network device sends to the UE the power configuration information of the synchronization signal corresponding to the LPWUS receiver of the UE, which enables the UE to be informed of the power configuration of the synchronization signal corresponding to the LPWUS receiver, and then enables the UE to determine, when the primary receiver is in the operation state, when to turn on the LPWUS receiver based on the power configuration information and the known receiving sensitivity of the LPWUS, thereby allowing the UE to more accurately control the turning on and off of the primary receiver and the LPWUS receiver, and saving power consumption of the UE.

It should be understood that the above general description and the subsequent detailed description are exemplary and explanatory only, and do not limit the present disclosure.

### BRIEF DESCRIPTION OF THE DRAWINGS

The accompanying drawings illustrated herein are used for providing a further understanding of the embodiments of the present disclosure and form part of the present application, and the schematic embodiments of the embodiments of the present disclosure and their illustrations are used for explaining the embodiments of the present disclosure and do not constitute an undue limitation on the embodiments of the present disclosure. In the accompanying drawings:

The accompanying drawings herein are incorporated into the specification and form part of the specification, illustrating embodiments in accordance with the embodiments of the present disclosure and used together with the specification to explain principles of the embodiments of the present disclosure.
FIG. 1 is a schematic diagram of an architecture of a wireless communication system provided by an embodiment of the present disclosure;
FIG. 2 is a flowchart of a method for transmitting power information of a synchronization signal illustrated according to an exemplary embodiment;
FIG. 3 is a flowchart of a method for transmitting power information of a synchronization signal illustrated according to an exemplary embodiment;
FIG. 4 is a flowchart of a method for transmitting power information of a synchronization signal illustrated according to an exemplary embodiment;
FIG. 5 is a flowchart of a method for receiving power information of a synchronization signal illustrated according to an exemplary embodiment;
FIG. 6 is a flowchart of a method for receiving power information of a synchronization signal illustrated according to an exemplary embodiment;
FIG. 7 is a flowchart of a method for sending power information of a synchronization signal illustrated according to an exemplary embodiment;
FIG. 8 is a flowchart of a method for sending power information of a synchronization signal illustrated according to an exemplary embodiment;
FIG. 9 is a flowchart of a method for sending power information of a synchronization signal illustrated according to an exemplary embodiment;
FIG. 10 is a structural diagram of an apparatus for receiving power information of a synchronization signal illustrated according to an exemplary embodiment;
FIG. 11 is a structural diagram of an apparatus for receiving power information of a synchronization signal illustrated according to an exemplary embodiment;
FIG. 12 is a structural diagram of an apparatus for sending power information of a synchronization signal illustrated according to an exemplary embodiment; and
FIG. 13 is a structural diagram of an apparatus for sending power information of a synchronization signal illustrated according to an exemplary embodiment.

### DETAILED DESCRIPTION

The embodiments of the present disclosure are further described in connection with the accompanying drawings and the DETAILED DESCRIPTION.

The exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present disclosure. On the contrary, they are only examples of devices and methods consistent with some aspects of the present disclosure as detailed in the appended claims.

The terms used in the embodiments of the present disclosure are used solely for the purpose of describing particular embodiments, and are not intended to limit the embodiments of the present disclosure. The singular forms of "a" and "the" used in the embodiments of the present disclosure and the appended claims are also intended to include the plural form, unless the context clearly indicates other meanings. It should also be understood that the term "and/or" as used in this article refers to and includes any or all possible combinations of one or more of the associated listed items.

It should be understood that although the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, the first information may also be referred to as the second information, and similarly, the second information may also be referred to as the first information. Depending on the context, the phrase "if" and "in case" as used herein may be interpreted as "at the time of......", "when ......", or "in response to determining".

The embodiments of the present disclosure are described in detail below, and examples of the embodiments are shown in the accompanying drawings, where the same or similar symbols throughout indicate the same or similar elements. The embodiments described below with reference to the accompanying drawings are exemplary and intended to be used for explaining the present disclosure, and should not be construed as the limitation on the present disclosure.

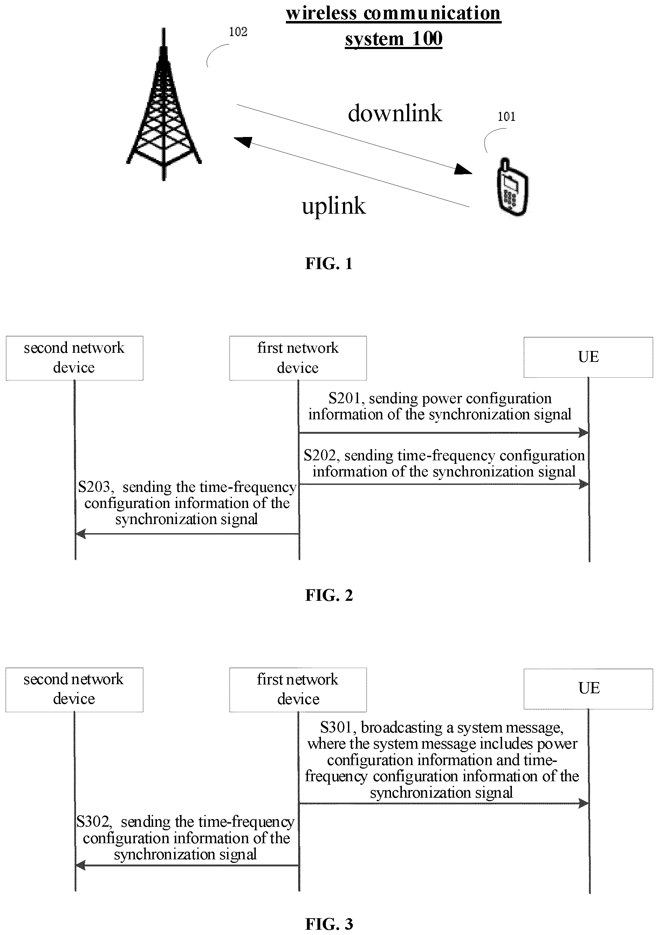

As shown in FIG. 1, a method for transmitting power information of a synchronization signal provided by the embodiments of the present disclosure may be applied to a wireless communication system 100. The wireless communication system may include, but is not limited to, a network device 101 and a UE 102. The UE 102 is configured to support carrier aggregation, and the UE 102 may be connected to a plurality of carrier units of the network device 101, where the plurality of carrier units include a primary carrier unit and one or multiple secondary carrier units.

It should be understood that the above wireless communication system 100 may be applicable to both low frequency and high frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for microwave access (WiMAX) communication system, a cloud radio access network (CRAN) system, a future 5th-generation (5G) system, a new radio (NR) communication system, or a future evolution public land mobile network (PLMN) system, etc.

The UE 102 shown above may be a user equipment, a terminal, an access terminal, a terminal unit, a terminal station, a mobile station (MS), a remote station, a remote terminal, a mobile terminal, a wireless communication device, a terminal agent, or a user device, etc. The UE 102 may have a wireless transceiving function, and be capable of communicating (e.g., wirelessly communicating) with one or more network devices 101 of one or more communication systems, and accepting a network service provided by the network device 101, where the network device 101 herein includes, but is not limited to, the base station illustrated in the drawing.

In some embodiments, the UE 102 may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, an in-vehicle device, a wearable device, a user device in a future 5G network, or a user device in a future evolution PLMN network, etc.

The network device 101 may be an access network device (or referred to as an access network site). In some embodiments, the access network device refers to a device providing a network access function, such as a radio access network (RAN) base station. The network device may specifically include a base station (BS) device, or include a base station device and a radio resource management device configured to control the base station device, etc. The network device may further include a relay station (a relay device), an access point, and a base station in the future 5G network, a base station in the future evolution PLMN network, or an NR base station, etc. The network device may be a wearable device or an in-vehicle device. The network device may also be a communication chip with a communication module.

For example, the network device 101 includes, but is not limited to, a next-generation base station (gnodeB, gNB) in 5G, an evolved node B (eNB) in the LTE system, a radio network controller (RNC), a node B (NB) in a wideband code division multiple access (WCDMA) system, a radio controller under the CRAN system, a base station controller (BSC), a base transceiver station (BTS) in a global system for mobile communication (GSM) system or a code division multiple access (CDMA) system, a home base station (for example, a home evolved nodeB, or a home node B (HNB)), a baseband unit (BBU), a transmitting and receiving point (TRP), a transmitting point (TP), or a mobile switching center, etc.

The embodiments of the present disclosure provide a method for transmitting power information of a synchronization signal, and FIG. 2 is a flowchart of a method for transmitting power information of a synchronization signal illustrated according to an exemplary embodiment. As shown in FIG. 2, the method includes steps S201 to S202, and the specifics are as follows.

At step S201, a first network device sends power configuration information of a synchronization signal to a UE.

The power configuration information of the synchronization signal sent by the first network device to the UE is used for indicating the power information of the synchronization signal corresponding to a set receiver of the UE, where the set receiver is configured to receive a low power wake up signal. In an example, the set receiver may be referred to as an LPWUS receiver.

After receiving the power configuration information of the synchronization signal, the UE is informed of the power information of the synchronization signal that is required to be received by the LPWUS receiver.

In some possible embodiments, the synchronization signal is a synchronization signal for the LPWUS receiver.

In some possible embodiments, the first network device sends the power configuration information of the synchronization signal to the UE in such a way that the first network device sends a dedicated signaling to the UE, where the dedicated signaling includes the power configuration information of the synchronization signal.

In some possible embodiments, the first network device sends the power configuration information of the synchronization signal to the UE in such a way that the first network device broadcasts a system message, where the system message includes the power configuration information of the synchronization signal.

In some possible embodiments, the power information is a power offset of a power of the synchronization signal relative to a power of an SSB (synchronization signal block, SS/PBCH block).

For example, the power of the synchronization signal is Pa, the power of the SSB is Pb, the power offset of the power of the synchronization signal relative to the power of the SSB is Pc, and Pc is Pa-Pb.

In some possible embodiments, the power information is a positive difference of the power of the synchronization signal over the power of the SSB (SS/PBCH block).

For example, the power of the synchronization signal is P1, the power of the SSB is P2, the positive difference of the power of the synchronization signal over the power of the SSB is P3, the value of P3 is positive, and the value of P3 is P1-P2.

The power of the synchronization signal indicated by the power configuration information is greater than the power of the SSB. This can overcome the problem of a small coverage range of the LPWUS receiver due to the sensitivity of the LPWUS receiver being lower than the sensitivity of the primary receiver, effectively increase the coverage range of the synchronization signal for the LPWUS receiver, and improve the coverage performance of the synchronization signal.

At step S202, the first network device sends time-frequency configuration information of the synchronization signal to the UE.

In some embodiments, the time-frequency configuration information includes at least one of the following: a frequency-domain position, a time-domain period, a time-domain position offset.

In an example, the first network device broadcasts a system message, where the system message includes the power configuration information of the synchronization signal, and the time-frequency configuration information of the synchronization signal.

In an example, the first network device broadcasts two system messages, where one of the system messages includes the power configuration information of the synchronization signal, and another one of the system messages includes the time-frequency configuration information of the synchronization signal.

At step S203, the first network device sends the time-frequency configuration information of the synchronization signal to a second network device.

The time-frequency configuration information of the synchronization signal includes at least one of the following: a frequency-domain position, a time-domain period, a time-domain position offset.

In some possible embodiments, a cell managed by the second network device is a neighbor cell of a cell managed by the first network device.

In the embodiments of the present disclosure, the first network device sends to the UE the power configuration information of the synchronization signal corresponding to the LPWUS receiver of the UE, which enables the UE to be informed of the power configuration of the synchronization signal corresponding to the LPWUS receiver, and then enables the UE to determine, when the primary receiver is in the operation state, when to turn on the LPWUS receiver based on the power configuration information and the known receiving sensitivity of the LPWUS, thereby allowing the UE to more accurately control the turning on and off of the primary receiver and the LPWUS receiver, and saving power consumption of the UE.

Moreover, the first network device sends the time-frequency configuration information of the synchronization signal to the second network device, which can avoid inter-cell interference. Specifically, after the first network device performs a power enhancement for the synchronization signal corresponding to the LPWUS receiver of the UE in the cell that the is managed by first network device, interference may be caused to another neighbor cell, so it is required to notify the time-frequency configuration information of the synchronization signal to the network device of the another cell, i.e., the second network device, which enables the second network device to avoid the time-frequency position of the synchronization signal when performing the scheduling, thereby avoiding the inter-cell interference.

The embodiments of the present disclosure provide a method for transmitting power information of a synchronization signal, and FIG. 3 is a flowchart of a method for transmitting power information of a synchronization signal illustrated according to an exemplary embodiment. As shown in FIG. 3, the method includes steps S301 to S302, and the specifics are as follows.

At step S301, a first network device broadcasts a system message, where the system message includes power configuration information and time-frequency configuration information of the synchronization signal.

In some embodiments, the power configuration information is used for indicating the power information of the synchronization signal corresponding to a set receiver of a UE, where the set receiver is configured to receive a low power wake up signal. In an example, the set receiver may be referred to as an LPWUS receiver.

The time-frequency configuration information of the synchronization signal includes at least one of the following: a frequency-domain position, a time-domain period, a time-domain position offset.

At step S302, the first network device sends the time-frequency configuration information of the synchronization signal to a second network device.

In some possible embodiments, a cell managed by the second network device is a neighbor cell of a cell managed by the first network device.

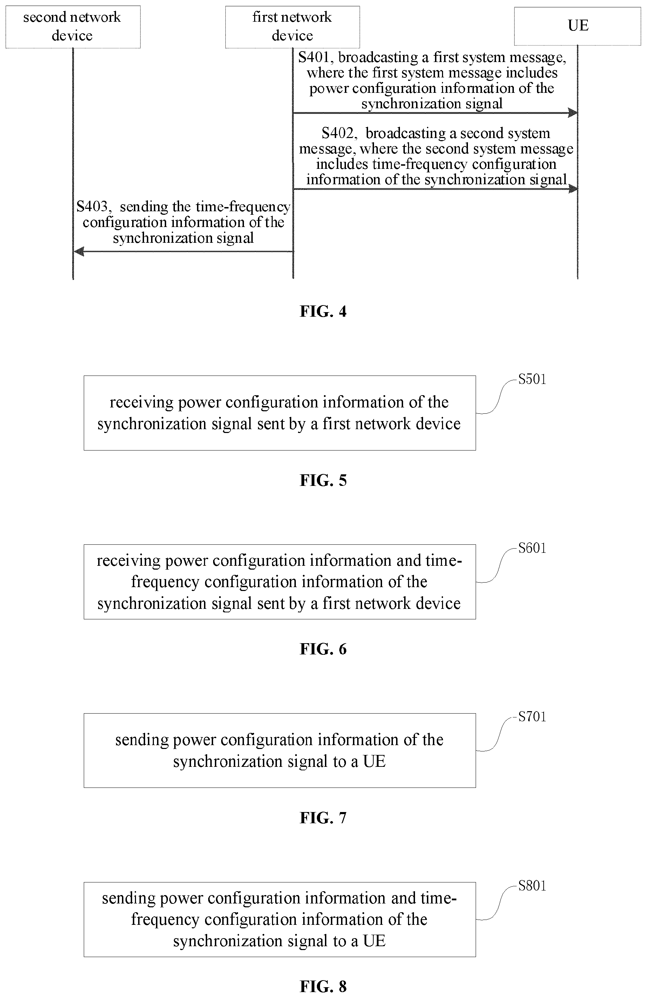

The embodiments of the present disclosure provide a method for transmitting power information of a synchronization signal, and FIG. 4 is a flowchart of a method for transmitting power information of a synchronization signal illustrated according to an exemplary embodiment. As shown in FIG. 4, the method includes steps S401 to S402, and the specifics are as follows.

At step S401, a first network device broadcasts a first system message, where the first system message includes power configuration information of the synchronization signal.

In some embodiments, the power configuration information is used for indicating the power information of the synchronization signal corresponding to a set receiver of a UE, where the set receiver is configured to receive a low power wake up signal. In an example, the set receiver may be referred to as an LPWUS receiver.

At step S402, the first network device broadcasts a second system message, where the second system message includes time-frequency configuration information of the synchronization signal.

The time-frequency configuration information of the synchronization signal includes at least one of the following: a frequency-domain position, a time-domain period, a time-domain position offset.

At step S403, the first network device sends the time-frequency configuration information of the synchronization signal to a second network device.

In some possible embodiments, a cell managed by the second network device is a neighbor cell of a cell managed by the first network device.

It should be noted that the sending order of steps S401, S402 and S403 is not limited to the order shown in FIG. 4, and it is possible to perform steps S401, S402, S403 in any order.

The embodiments of the present disclosure provide a method for receiving power information of a synchronization signal, which is performed by a UE. FIG. 5 is a flowchart of a method for receiving power information of a synchronization signal illustrated according to an exemplary embodiment. As shown in FIG. 5, the method includes step S501, and the specifics are as follows.

At step S501, power configuration information of the synchronization signal sent by a first network device is received.

The power configuration information is used for indicating the power information of the synchronization signal corresponding to a set receiver of the UE, where the set receiver is configured to receive a low power wake up signal. In an example, the set receiver may be referred to as an LPWUS receiver.

In some possible embodiments, receiving the power configuration information of the synchronization signal sent by the first network device includes receiving a dedicated signaling sent by the first network device, where the dedicated signaling includes the power configuration information of the synchronization signal.

In some possible embodiments, receiving the power configuration information of the synchronization signal sent by the first network device includes receiving a system message broadcast by the first network device, where the system message includes the power configuration information of the synchronization signal.

In some possible embodiments, the power information of the synchronization signal corresponding to the set receiver of the UE is a power offset of a power of the synchronization signal relative to a power of an SSB.

For example, the power of the synchronization signal is Pa, the power of the SSB is Pb, the power offset of the power of the synchronization signal relative to the power of the SSB is Pc, and Pc is Pa-Pb.

In a specific example, the LPWUS receiver of the UE has a sensitivity of -80 dBm. When the UE is in the RRC idle state, the UE turns on the primary receiver and receives the SSB through the primary receiver, and the primary receiver measures a reference signal receiving power (RSRP) of the SSB as received. The UE receives the system message broadcast by the first network device, where the system message indicates that the power of the LPWUS is 10 dB higher than the power of the SSB.

If the power of the SSB measured by the primary receiver is -100 dBm, the UE may determine, based on the system message, that a receiving power corresponding to the synchronization signal received by the LPWUS receiver is -90 dBm, which does not reach the minimum receiving power of -80 dBm of the LPWUS receiver, and thus the UE determines that there is no need to turn on the LPWUS receiver.

If the power of the SSB measured by the primary receiver is -85 dBm, the UE may determine, based on the system message, that the receiving power corresponding to the synchronization signal received by the LPWUS receiver is -75 dBm, which has reached the minimum receiving power of -80 dBm of the LPWUS receiver, and thus the UE determines that there is a need to turn on the LPWUS receiver.

In some possible embodiments, the power information of the synchronization signal corresponding to the set receiver of the UE is a positive difference between the power of the synchronization signal and the power of the SSB, where the power of the synchronization signal is greater than the power of the SSB.

For example, the power of the synchronization signal is P1, the power of the SSB is P2, the positive difference of the power of the synchronization signal over the power of the SSB is P3, the value of P3 is positive, and the value of P3 is P1-P2.

In a specific example, the LPWUS receiver of the UE has a sensitivity of -80 dBm. When the UE is in the RRC idle state, the UE turns on the primary receiver and receives the SSB through the primary receiver, and the primary receiver measures an RSRP of the SSB as received. The UE receives the system message broadcast by the first network device, where the system message indicates that the power offset of the power of the LPWUS compared to the power of the SSB is -20 dB (i.e., the power of the LPWUS is -20 dB lower than the power of the SSB).

If the power of the SSB measured by the primary receiver is -70 dBm, the UE may determine, based on the system message, that the receiving power corresponding to the synchronization signal received by the LPWUS receiver is -90 dBm, which does not reach the minimum receiving power of -80 dBm of the LPWUS receiver, and thus the UE determines that there is no need to turn on the LPWUS receiver.

If the power of the SSB measured by the primary receiver is -60 dBm, the UE may determine, based on the system message, that the receiving power corresponding to the synchronization signal received by the LPWUS receiver is -80 dBm, which has reached the minimum receiving power of -80 dBm of the LPWUS receiver, and thus the UE determines that there is a need to turn on the LPWUS receiver.

The power of the synchronization signal indicated by the power configuration information is greater than the power of the SSB. This can overcome the problem of a small coverage range of the LPWUS receiver due to the sensitivity of the LPWUS receiver being lower than the sensitivity of the primary receiver, effectively increase the coverage range of the synchronization signal for the LPWUS receiver, and improve the coverage performance of the synchronization signal.

In some possible embodiments, the time-frequency configuration information of the synchronization signal is a default value, and does not need to be configured by the first network device.

The embodiments of the present disclosure provide a method for receiving power information of a synchronization signal, which is performed by a UE. FIG. 6 is a flowchart of a method for receiving power information of a synchronization signal illustrated according to an exemplary embodiment. As shown in FIG. 6, the method includes step S601, and the specifics are as follows.

At step S601, power configuration information and time-frequency configuration information of the synchronization signal sent by a first network device is received.

In some possible embodiments, receiving the power configuration information and the time-frequency configuration information of the synchronization signal sent by the first network device includes receiving a system message broadcast by the first network device, where the system message includes the power configuration information and the time-frequency configuration information of the synchronization signal.

In some possible embodiments, receiving the power configuration information and the time-frequency configuration information of the synchronization signal sent by the first network device includes: receiving a first system message broadcast by the first network device, where the first system message includes the power configuration information of the synchronization signal; and receiving a second system message broadcast by the first network device, where the second system message includes the time-frequency configuration information of the synchronization signal.

In some possible embodiments, receiving the power configuration information and the time-frequency configuration information of the synchronization signal sent by the first network device includes: receiving a second system message broadcast by the first network device, where the second system message includes the time-frequency configuration information of the synchronization signal; and receiving a first system message broadcast by the first network device, where the first system message includes the power configuration information of the synchronization signal.

In the embodiments of the present disclosure, after the UE is informed of the power configuration information and the time-frequency configuration information of the synchronization signal corresponding to the LPWUS receiver, the UE determines, when the primary receiver is in the operation state, when to turn on the LPWUS receiver based on the power configuration information and the known receiving sensitivity of the LPWUS, which allows the UE to more accurately control the turning on and off of the primary receiver and the LPWUS receiver, and saves power consumption of the UE. In addition, the synchronization signal can be accurately received based on the time-frequency configuration information of the synchronization signal.

The embodiments of the present disclosure provide a method for sending power information of a synchronization signal, which is performed by a first network device. FIG. 7 is a flowchart of a method for sending power information of a synchronization signal illustrated according to an exemplary embodiment. As shown in FIG. 7, the method includes step S701, and the specifics are as follow.

At step S701, power configuration information of the synchronization signal is sent to a UE.

In some embodiments, the power configuration information is used for indicating the power information of the synchronization signal corresponding to a set receiver of the UE, where the set receiver is configured to receive a low power wake up signal. In an example, the set receiver may be referred to as an LPWUS receiver.

In some possible embodiments, sending the power configuration information of the synchronization signal to the UE includes sending a dedicated signaling to the UE, where the dedicated signaling includes the power configuration information of the synchronization signal.

In some possible embodiments, sending the power configuration information of the synchronization signal to the UE includes broadcasting a system message, where the system message includes the power configuration information of the synchronization signal.

In some possible embodiments, the power information of the synchronization signal corresponding to the set receiver of the UE is a power offset of a power of the synchronization signal relative to a power of an SSB.

For example, the power of the synchronization signal is Pa, the power of the SSB is Pb, the power offset of the power of the synchronization signal relative to the power of the SSB is Pc, and Pc is Pa-Pb.

In a specific example, the LPWUS receiver of the UE has a sensitivity of -80 dBm. When the UE is in the RRC idle state, the UE turns on the primary receiver and receives the SSB through the primary receiver, and the primary receiver measures an RSRP of the SSB as received. The UE receives the system message broadcast by the first network device, where the system message indicates that the power of the LPWUS is 10 dB higher than the power of the SSB.

If the power of the SSB measured by the primary receiver is -100 dBm, the UE may determine, based on the system message, that a receiving power corresponding to the synchronization signal received by the LPWUS receiver is -90 dBm, which does not reach the minimum receiving power of -80 dBm of the LPWUS receiver, and thus the UE determines that there is no need to turn on the LPWUS receiver.

If the power of the SSB measured by the primary receiver is -85 dBm, the UE may determine, based on the system message, that the receiving power corresponding to the synchronization signal received by the LPWUS receiver is -75 dBm, which has reached the minimum receiving power of -80 dBm of the LPWUS receiver, and thus the UE determines that there is a need to turn on the LPWUS receiver.

In some possible embodiments, the power information of the synchronization signal corresponding to the set receiver of the UE is a positive difference of the power of the synchronization signal over the power of the SSB.

For example, the power of the synchronization signal is P1, the power of the SSB is P2, the positive difference of the power of the synchronization signal over the power of the SSB is P3, the value of P3 is positive, and the value of P3 is P1-P2.

The power of the synchronization signal indicated by the power configuration information configured by the first network device is greater than the power of the SSB. This can overcome the problem of a small coverage range of the LPWUS receiver due to the sensitivity of the LPWUS receiver being lower than the sensitivity of the primary receiver, effectively increase the coverage range of the synchronization signal for the LPWUS receiver, and improve the coverage performance of the synchronization signal.

The embodiments of the present disclosure provide a method for sending power information of a synchronization signal, which is performed by a first network device. FIG. 8 is a flowchart of a method for sending power information of a synchronization signal illustrated according to an exemplary embodiment. As shown in FIG. 8, the method includes step S801, and the specifics are as follows.

At step S801, power configuration information and time-frequency configuration information of the synchronization signal is sent to a UE.

In some possible embodiments, sending the power configuration information and the time-frequency configuration information of the synchronization signal to the UE includes broadcasting a system message, where the system message includes the power configuration information and the time-frequency configuration information of the synchronization signal. That is, both the power configuration information and the time-frequency configuration information of the synchronization signal are included in the same system message.

In some possible embodiments, sending the power configuration information and the time-frequency configuration information of the synchronization signal to the UE includes: broadcasting a first system message, where the first system message includes the power configuration information of the synchronization signal; and broadcasting a second system message, where the second system message includes the power configuration information of the synchronization signal.

In some possible embodiments, sending the power configuration information and the time-frequency configuration information of the synchronization signal to the UE includes: broadcasting a second system message, where the second system message includes the power configuration information of the synchronization signal; and broadcasting a first system message, where the first system message includes the power configuration information of the synchronization signal.

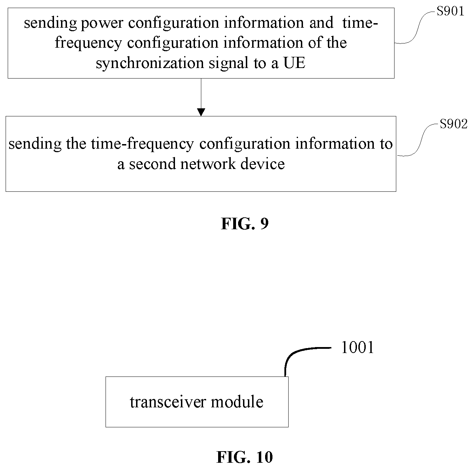

The embodiments of the present disclosure provide a method for sending power information of a synchronization signal, which is performed by a first network device. FIG. 9 is a flowchart of a method for sending power information of a synchronization signal illustrated according to an exemplary embodiment. As shown in FIG. 9, the method includes step S901, and the specifics is as follows.

At step S901, power configuration information and time-frequency configuration information of the synchronization signal is sent to a UE.

At step S902, the time-frequency configuration information is sent to a second network device.

In some possible embodiments, a cell managed by the second network device is a neighbor cell of a cell managed by the first network device.

In the embodiments of the present disclosure, the first network device sends the time-frequency configuration information of the synchronization signal to the second network device, which can avoid inter-cell interference. Specifically, after the first network device performs a power enhancement for the synchronization signal corresponding to the LPWUS receiver of the UE in the cell that is managed by the first network device, interference may be caused to another neighbor cell, so it is required to notify the time-frequency configuration information of the synchronization signal to the network device of the another cell, i.e., the second network device, which enables the second network device to avoid the time-frequency position of the synchronization signal when performing the scheduling, thereby avoiding the inter-cell interference.

Based on the same idea as the above method embodiments, the embodiments of the present disclosure also provide a communication device. The communication device may have the function of the UE 102 in the above method embodiments and be configured to perform the steps executed by the UE 102 provided in the above embodiments. The function may be implemented by hardware, or may be implemented by software or hardware executing corresponding software. The hardware or software includes one or more modules corresponding to the above-described function.

In a possible implementation, the communication device 1000 as shown in FIG. 10 may serve as the UE 102 involved in the above method embodiments, and perform the steps executed by the UE 102 in one of the above method embodiments.

The communication device 1000 includes a transceiver module 1001.

The transceiver module 1001 is configured to receive power configuration information of a synchronization signal sent by a first network device, where the power configuration information is used for indicating the power information of the synchronization signal corresponding to a set receiver of the UE, and the set receiver is configured to receive a low power wake up signal.

In some possible embodiments, the transceiver module 1001 is further configured to receive a system message broadcast by the first network device, where the system message includes the power configuration information of the synchronization signal.

In some possible embodiments, the power information is a power offset of a power of the synchronization signal relative to a power of an SSB.

In some possible embodiments, the transceiver module 1001 is further configured to the power information is a positive difference of a power of the synchronization signal over a power of an SSB.

In some possible embodiments, the transceiver module 1001 is further configured to receive time-frequency configuration information of the synchronization signal sent by the first network device, where the time-frequency configuration information includes at least one of the following: a frequency-domain position, a time-domain period, a time-domain position offset.

In some possible embodiments, the transceiver module 1001 is further configured to receive a system message broadcast by the first network device, where the system message includes the time-frequency configuration information.

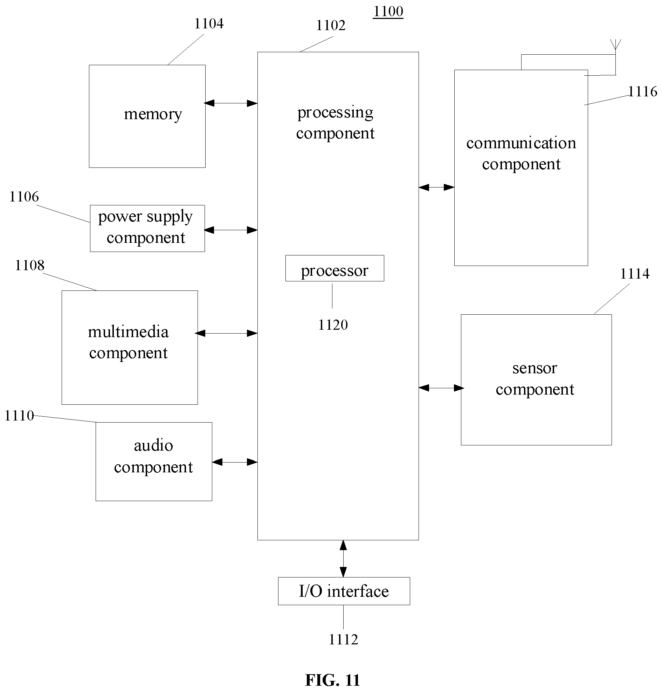

When the communication device is the UE 102, its structure may also be shown in FIG. 11.

FIG. 11 is a block diagram of an apparatus 1100 for transmitting power information of a synchronization signal illustrated according to an exemplary embodiment. For example, the apparatus 1100 may be a cell phone, a computer, a digital broadcast terminal, a message transceiver device, a game console, a tablet device, a medical device, a fitness device, or a personal digital assistant.

Referring to FIG. 11, the apparatus 1100 may include one or more of the following components: a processing component 1102, a memory 1104, a power supply component 1106, a multimedia component 1108, an audio component 1110, an input/output (I/O) interface 1112, a sensor component 1114, a communication component 1116.

The processing component 1102 generally controls overall operation of the apparatus 1100, such as operations associated with display, telephone calls, data communication, camera operations, and recording operations. The processing component 1102 may include one or more processors 1120 to execute an instruction, thereby completing all or part of the steps of the methods described above. In addition, the processing component 1102 may include one or more modules that facilitate interaction between the processing component 1102 and other components. For example, the processing component 1102 may include a multimedia module to facilitate interaction between the multimedia component 1108 and the processing component 1102.

The memory 1104 is configured to store various types of data to support operations at the apparatus 1100. Examples of such data include the following for any application program or method operated on the apparatus 1100: instructions, contact data, phonebook data, messages, pictures, videos, etc. The memory 1104 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 1106 supplies power to various components of the apparatus 1100. The power supply component 1106 may include a power supply management system, one or more power supplies, and other components associated with generating, managing and distributing power for the apparatus 1100.

The multimedia component 1108 includes a screen that provides an output interface between the apparatus 1100 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 1108 includes a front-facing camera and/or a rear-facing camera. The front-facing camera and/or the rear-facing camera may receive external multimedia data when the apparatus 1100 is in an operating mode, such as a shooting mode or a video mode. Each of the front-facing camera and the rear-facing camera may be a fixed optical lens system or have a focal length and optical zoom capability.

The audio component 1110 is configured to output and/or input audio signals. For example, the audio component 1110 includes a microphone (MIC), configured to receive external audio signals when the apparatus 1100 is in an operating mode, such as a calling mode, a recording mode and a voice recognition mode. The received audio signals may be further stored in the memory 1104 or sent via the communication component 1116. In some embodiments, the audio component 1110 further includes a speaker for outputting the audio signals.

The I/O interface 1112 provides an interface between the processing component 1102 and a peripheral interface module, and the peripheral interface module described above may be a keypad, a click wheel, a button, etc. These buttons may include, but are not limited to, a home button, a volume button, a start button, and a lock button.

The sensor component 1114 includes one or more sensors configured to provide status assessment of various aspects of the apparatus 1100. For example, the sensor component 1114 may detect an open/closed state of the apparatus 1100, relative positioning of the components, for example, the components are the display and small keypad of the apparatus 1100; the sensor component 1114 may also detect a change in the position of the apparatus 1100 or a change in the position of one component of the apparatus 1100, the presence or absence of user contact with the apparatus 1100, the orientation or acceleration/deceleration of the apparatus 1100, and temperature changes of the apparatus 1100. The sensor component 1114 may include a proximity sensor that is configured to detect the presence of nearby objects in the absence of any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate the communication between the apparatus 1100 and other devices by wired or wireless means. The apparatus 1100 may access a wireless network based on a communication standard, such as WiFi, 4G, 5G, or a combination thereof. In an exemplary embodiment, the communication component 1116 receives broadcast signals or broadcast-related information from an external broadcast management system via a broadcast channel. In an exemplary embodiment, the communication component 1116 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology, and the like.

In an exemplary embodiment, the apparatus 1100 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, to perform the above methods.

In an exemplary embodiment, a non-transitory computer-readable storage medium including an instruction is also provided, such as the memory 1104 including an instruction. The instruction described above is capable of being executed by the processor 1120 of the apparatus 1100 to complete the above methods. For example, the non-transitory computer-readable storage medium may be an ROM, a random access memory (RAM), a CD-ROM, a magnetic tape, a floppy disk, or an optical data storage device.

Based on the same idea as the above method embodiments, the embodiments of the present disclosure also provide a communication device. The communication device may have the function of the network device 101 in the above method embodiments and be configured to perform the steps executed by the network device 101 provided in the above embodiments. The function may be implemented by hardware, or may be implemented by software or hardware executing corresponding software. The hardware or software includes one or more modules corresponding to the above-described function.

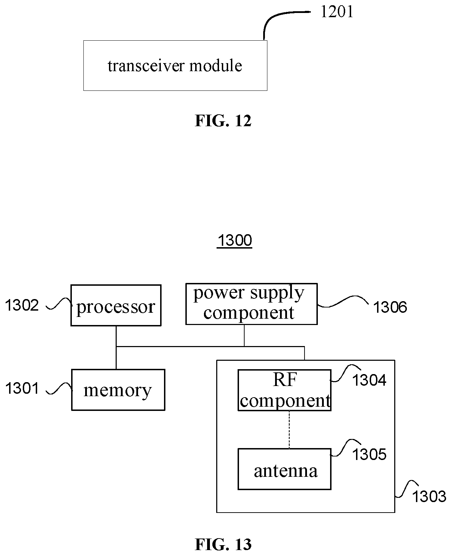

In a possible implementation, the communication device 1200 as shown in FIG. 12 may serve as the network device 101 involved in the above method embodiments, and perform the steps executed by the network device 101 in the above method embodiments.

The communication device 1200 as shown in FIG. 12 includes a transceiver module 1201.

The transceiver module 1201 is configured to send power configuration information of the synchronization signal to a UE, where the power configuration information is used for indicating the power information of the synchronization signal corresponding to a set receiver of the UE, and the set receiver is configured to receive a low power wake up signal.

In some possible embodiments, the transceiver module 1201 is further configured to broadcast a system message, where the system message includes the power configuration information of the synchronization signal.

In some possible embodiments, the power information is a power offset of a power of the synchronization signal relative to a power of an SSB.

In some possible embodiments, the power information is a positive difference of a power of the synchronization signal over a power of an SSB.

In some possible embodiments, the transceiver module 1201 is further configured to send time-frequency configuration information of the synchronization signal to the UE, where the time-frequency configuration information includes at least one of the following: a frequency-domain position, a time-domain period, a time-domain position offset.

In some possible embodiments, the transceiver module 1201 is further configured to broadcast a system message, where the system message includes the time-frequency configuration information.

In some possible embodiments, the transceiver module 1201 is further configured to send the time-frequency configuration information to a second network device.

When the communication device is a network device, its structure may also be shown in FIG. 13. The structure of the communication device is illustrated by taking the network device 101 being a base station as an example. As shown in FIG. 13, the device 1300 includes a memory 1301, a processor 1302, a transceiver component 1303, and a power supply component 1306. The memory 1301 is coupled to the processor 1302, and may be configured to save programs and data necessary for the communication device 1300 to implement various functions. The processor 1302 is configured to support the communication device 1300 in performing the corresponding function in the above methods, and the function may be implemented by invoking a program stored in the memory 1301. The transceiver component 1303 may be a wireless transceiver that may be configured to support the communication device 1300 in performing, via a wireless air interface, receiving signaling and/or data, and sending signaling and/or data. The transceiver component 1303 may also be referred to as a transceiver unit or a communication unit, and the transceiver component 1303 may include a radio frequency (RF) component 1304 and one or more antennas 1305, where the RF component 1304 may be a remote radio unit (RRU), which may be specifically configured for transmission of RF signals and conversion between RF signals and baseband signals, and the one or more antennas 1305 may be specifically configured to perform radiation and reception of RF signals.

When the communication device 1300 needs to send data, the processor 1302, after performing baseband processing on the data to be sent, may output a baseband signal to an RF unit, and the RF unit, after performing RF processing on the baseband signal, sends the RF signal in the form of electromagnetic waves through the antenna. When there is data sent to the communication device 1300, the RF unit receives an RF signal through the antenna, converts the RF signal to a baseband signal, and outputs the baseband signal to the processor 1302, and the processor 1302 converts the baseband signal to data and processes the data.

After considering the specification and practicing the invention disclosed herein, those skilled in the art will easily come up with other implementation solutions of the embodiments of the present disclosure. The present application is intended to cover any variations, uses or adaptive changes of the embodiments of the present disclosure, and the variations, uses or adaptive changes follow the general principles of the embodiments of the present disclosure and include common knowledge or commonly used technical means in the art that are not disclosed in the present disclosure. The specification and embodiments are only considered to be exemplary, and the true scope and spirit of the embodiments of the present disclosure are indicated by the following claims.

It should be understood that the embodiments of the present disclosure are not limited to the precise structure which has been described above and illustrated in the accompanying drawings, and that various modifications and alterations may be made without departing from the scope of the embodiments of the present disclosure. The scope of the embodiments of the present disclosure is limited only by the appended claims.

### INDUSTRIAL APPLICABILITY

The first network device sends to the UE the power configuration information of the synchronization signal corresponding to the LPWUS receiver of the UE, which enables the UE to be informed of the power configuration of the synchronization signal corresponding to the LPWUS receiver, and then enables the UE to determine, when the primary receiver is in the operation state, when to turn on the LPWUS receiver based on the power configuration information and the known receiving sensitivity of the LPWUS, thereby allowing the UE to more accurately control the turning on and off of the primary receiver and the LPWUS receiver, and saving power consumption of the UE. Moreover, when the power of the synchronization signal is greater than the power of the SSB, the problem of a small coverage range of the LPWUS receiver due to the sensitivity of the LPWUS receiver being lower than the sensitivity of the primary receiver is overcome, the coverage range of the synchronization signal for the LPWUS receiver is effectively increased, and the coverage performance of the synchronization signal is improved.

## Claims

1. A method for transmitting power information of a synchronization signal, performed by a user equipment (UE), wherein the method comprises:
receiving power configuration information of the synchronization signal sent by a first network device, wherein the power configuration information is used for indicating the power information of the synchronization signal corresponding to a set receiver of the UE, and the set receiver is configured to receive a low power wake up signal.

2. The method according to claim 1, wherein the receiving the power configuration information sent by the first network device comprises:
receiving a system message broadcast by the first network device, wherein the system message comprises the power configuration information of the synchronization signal.

3. The method according to claim 1, wherein the power information is a power offset of a power of the synchronization signal relative to a power of a synchronization signal block (SSB).

4. The method according to claim 1, wherein the power information is a positive difference of a power of the synchronization signal over a power of an SSB.

5. The method according to any one of claims 1 to 4, further comprising:
receiving time-frequency configuration information of the synchronization signal sent by the first network device, wherein
the time-frequency configuration information comprises at least one of: a frequency-domain position, a time-domain period, and a time-domain position offset.

6. The method according to claim 5, further comprising:
receiving a system message broadcast by the first network device, wherein the system message comprises the time-frequency configuration information.

7. A method for transmitting power information of a synchronization signal, performed by a first network device, wherein the method comprises:
sending power configuration information of the synchronization signal to a user equipment (UE), wherein the power configuration information is used for indicating the power information of the synchronization signal corresponding to a set receiver of the UE, and the set receiver is configured to receive a low power wake up signal.

8. The method according to claim 7, wherein the sending the power configuration information to the UE comprises:
broadcasting a system message, wherein the system message comprises the power configuration information of the synchronization signal.

9. The method according to claim 7, wherein the power information is a power offset of a power of the synchronization signal relative to a power of a synchronization signal block (SSB).

10. The method according to claim 7, wherein the power information is a positive difference of a power of the synchronization signal over a power of an SSB.

11. The method according to claim 7, further comprising:
sending time-frequency configuration information of the synchronization signal to the UE, wherein
the time-frequency configuration information comprises at least one of: a frequency-domain position, a time-domain period, and a time-domain position offset.

12. The method according to any one of claims 7 to 11, further comprising:
broadcasting a system message, wherein the system message comprises the time-frequency configuration information.

13. The method according to claim 12, further comprising:
sending the time-frequency configuration information to a second network device.

14. An apparatus for transmitting power information of a synchronization signal, configured in a user equipment (UE), wherein the apparatus comprises:
a transceiver module, configured to receive power configuration information sent by a first network device, wherein the power configuration information is used for indicating the power information of the synchronization signal corresponding to a set receiver of the UE, and the set receiver is configured to receive a low power wake up signal.

15. An apparatus for transmitting power information of a synchronization signal, configured in a first network device, wherein the apparatus comprises:
a transceiver module, configured to send power configuration information to a user equipment (UE), wherein the power configuration information is used for indicating the power information of the synchronization signal corresponding to a set receiver of the UE, and the set receiver is configured to receive a low power wake up signal.

16. A communication device, comprising a processor and a memory, wherein
the memory is configured to store a computer program; and
the processor is configured to execute the computer program, thereby implementing the method according to any one of claims 1-6.

17. A communication device, comprising a processor and a memory, wherein
the memory is configured to store a computer program; and
the processor is configured to execute the computer program, thereby implementing the method according to any one of claims 7-13.

18. A computer-readable storage medium, wherein the computer-readable storage medium stores an instruction that, when invoked and executed on a computer, causes the computer to perform the method according to any one of claims 1 to 6.

19. A computer-readable storage medium, wherein the computer-readable storage medium stores an instruction that, when invoked and executed on a computer, causes the computer to perform the method according to any one of claims 7 to 13.
